# EUROPÄISCHE PATENTSCHRIFT

(11) **EP 1 130 984 B1**
(45) Veröffentlichungstag und Bekanntmachung des Hinweises auf die Patenterteilung: **23.04.2003**
(21) Anmeldenummer: 99972079.0
(22) Anmeldetag: 11.11.1999
(51) Int. Cl.: A46D 3/04, A46B 3/04

(54) **VERFAHREN ZUR HERSTELLUNG VON BORSTENWAREN**
METHOD FOR PRODUCING BRUSH ARTICLES
PROCEDE POUR PRODUIRE DES ARTICLES DE BROSSERIE

(30) Priorität: 18.11.1998 DE 19853030
(43) Veröffentlichungstag der Anmeldung: 12.09.2001
(73) Patentinhaber: CORONET-WERKE GmbH, 69483 Wald-Michelbach (DE)
(72) Erfinder: WEIHRAUCH, Georg, D-69483 Wald-Michelbach (DE)
(74) Vertreter: Lichti, Heiner, Dipl.-Ing.
(86) Internationale Anmeldenummer: EP9908707
(87) Internationale Veröffentlichungsnummer: WO00028856

(56) Entgegenhaltungen:
- DE-A- 4 014 926
- DE-A- 4 029 610
- DE-A- 4 415 886
- US-A- 4 988 146
- US-A- 5 622 411

## Beschreibung

Die Erfindung betrifft ein Verfahren zur Herstellung von Borstenwaren, indem ein Borstenträger aus thermoplastischem Kunststoff mit Aufnahmen für die Borsten hergestellt, die Borsten mit ihren befestigungsseitigen Enden in die Aufnahmen eingeführt und durch Einwirken mechanischer Kräfte auf den Borstenträger an diesem befestigt werden, wobei Masse des Borstenträgers unter Verengung der Aufnahmen an die befestigungsseitigen Enden der Borsten diese seitlich umschließend verdrängt wird.

Bei der Herstellung von Borstenwaren wird bis heute das seit langer Zeit übliche Stanzverfahren angewandt, bei dem die Borstenbündel mittels Ankern in vorbereitete Aufnahmelöcher am Borstenträger eingetrieben und befestigt werden. Dabei ist es auch bekannt (GB 278 315), den Borstenträger aus Leichtmetall auszubilden und im Bereich der Löcher mittels eines das Borstenbündel umfassenden Hohlstengels zu stauchen, um das Leichtmetall durch Kaltverformen in das Loch zu verdrängen und das Loch um das Bündel zu schließen. Eine solchermaßen hergestellte Bürste entspricht heutigen Anforderungen verständlicherweise nicht mehr. Die Stanztechnik wird in den letzten Jahren zunehmend durch kunststofftechnologische Verfahren ersetzt, bei denen die Verbindung von Borsten und Borstenträger ankerlos und.im wesentlichen durch Formschlußkräfte zwischen dem Kunststoffmaterial des Borstenträgers und den Borsten oder aber werkstoffschlüssig erhalten wird.

Bekannt sind rein thermische Verfahren auf Basis der Spritzgießtechnik und Schweißtechnik. Im ersten Fall werden die Borsten oder Borstenbündel an ihren Enden angeschmolzen, um einerseits die Borsten miteinander zu verbinden, andererseits durch Reorientierung der Molekularstruktur am Borstenende eine Verdickung zu erzeugen. Diese Verdickung wird dann in einem. Spritzgießvorgang mit dem Kunststoffmaterial des Borstenträgers umspritzt (DE 44 15 886, DE 35 11 528, DE 36 42 124, EP 0 142 885).

Beim Verschweißen werden die Oberfläche des Borstenträgers und die Borsten an ihren befestigungsseitigen Enden angeschmolzen und zusammengeführt, was in der Regel gleiche oder affine Polymermaterialien voraussetzt. Bei einer Variante dieses Verfahrens (US 4 637 660) werden vorgeformte Einsenkungen vergleichsweise geringer Tiefe am Borstenträger aufgeschmolzen und die Schmelze nach außen über die Borstenträgeroberfläche verdrängt: In diese Einsenkung wird das am befestigungsseitigen Ende aufgeschmolzene Bündel eingeführt und fixiert, bis die über die Oberfläche aufgestiegene Schmelze des Borsten- trägers durch molekulare Reorientierung hinter der Verdickung wieder zusammenläuft. Im Ergebnis wird ein Formschluß ähnlich der Spritzgießtechnik erhalten. Bei einem abgewandelten Verfahren werden die Aufnahmelöcher am Borstenträger thermisch eingeformt und die Lochwandung aufgeschmolzen. Anschließend werden die bereits erstarrten Verdickungen an den befestigungsseitigen Enden der Bündel in die Schmelze eingedrückt und die zuvor oder beim Einsetzen der Bündel aufsteigende Schmelze durch Druck hinter die Verdickungen angedrückt. Gleichzeitig wird die Borstenträgeroberfläche randseitig abgedichtet und durch den Druck die Borstenträgeroberfläche egalisiert (US 5 622 411).

Daneben sind Abwandlungen der vorgenannten Verfahren beschrieben. So ist es bekannt, die Aufnahmelöcher am Borstenträger nur im unteren Bereich aufzuschmelzen und die unverformten befestigungsseitigen Enden der Borsten in die Schmelze einzudrücken (DE 36 37 750). Dabei soll die Schmelze zwischen den einzelnen Borsten des Bündels eindringen und bis zur Borstenträgeroberfläche aufsteigen. Bei einem anderen Verfahren (US 5 224 763) ist jedes Aufnahmeloch am Borstenträger mit einem dessen Oberfläche überragenden Kragen versehen. Das Loch verjüngt sich konisch zum Lochgrund. Der Kragen und der sich unmittelbar anschließende Bereich der Lochwand wird soweit erwärmt, daß der Kunststoff erweicht, jedoch nicht schmilzt, Aufnahmeloch und Kragen also ihre Form behalten. Anschließend wird das an seinem befestigungsseitigen Ende mit einer Verdickung versehene Borstenbündel eingesetzt, wobei der Querschnitt der Verdickung so bemessen ist, daß diese erst in mittlerer Eintauchtiefe in Kontakt mit der Lochwandung kommt. Anschließend wird die erweichte Kunststoffmasse des Kragens in das Loch und zusammen mit der erweichten Lochwandung in Richtung auf die Verdickung verdrängt. Nach dem Erstarren liegt dann ein Formschluß vor.

Bei einem anderen Verfahren (DE 40 29 610) werden die Bündel mit ihrem befestigungsseitigen Ende in einen Kanal einer Lochplatte eingeführt. Sie werden noch innerhalb des Kanals an der freiliegenden Stirnseite aufgeschmolzen und anschließend durch den Kanal durchgeschoben und mit ihren befestigungsseitigen Enden in vorbereitete Aufnahmelöcher am Borstenträger unter Verdrängen der Schmelze an den Borstenenden in Hinterschneidungen der Löcher befestigt.

Schließlich ist ein Verfahren bekannt (US 4 988 146) bei dem die Lochwandung und/oder die Verdickung am Bündelende auf eine Temperatur unterhalb der Schmelztemperatur erwärmt und das Bündel anschließend unter Druck in das Aufnahmeloch eingesetzt wird, wobei sich Lochwandung und/oder Verdickung während des Fügens entropieelastisch verformen und sich am Ende des Fügevorgangs zurückverformen, so daß auch hier wieder ein Formschluß für Borstenträger und Borstenbündel bzw. Verdickung erhalten wird.

Alle thermischen Verfahren, bei denen der Borstenträger aufgeschmolzen wird, sind mit dem Nachteil verknüpft, daß vor allem die äußeren Borstenmonofile mit erhöhter Temperatur beaufschlagt werden, und zwar vornehmlich in dem für die Auszugsfestigkeit und das Biegeverhalten der Borsten besonders kritischen Bereich der befestigungsseitigen Enden. Die Borstenmonofile, die in einem komplizierten Extrudier- bzw. Spinnverfahren hergestellt werden, um ihnen die notwendige Biegefähigkeit einerseits und eine hohe Dauerbiegefestigkeit andererseits zu verleihen, sind in ihrer Molekularstruktur extrem stark längsorientiert. Durch erhöhte Temperatur findet eine molekulare Umstrukturierung statt, die zumindest mit einem Teilverlust der gewünschten Eigenschaften verbunden ist. Es sollten deshalb die Borsten keiner erhöhten Temperatur und -wenn unvermeidbar- einer solchen Temperatur nur auf sehr kurze Dauer ausgesetzt werden. Bei den anderen bekannten Verfahren, bei denen nicht im schmelzflüssigen, sondern nur weichen Zustand gearbeitet wird, sind die negativen Einflüsse auf die Borstenmonofile zwar reduziert, doch ist der gewünschte Formschluß zwischen Borstenträger und Borstenbündel in der Regel unzulänglich und leidet somit die Auszugsfestigkeit der Borsten.

Der Erfindung liegt die Aufgabe zugrunde, ein Fügeverfahren zur Herstellung von Borstenwaren vorzuschlagen, das ohne oder allenfalls mit geringem Wärmeeinsatz am Borstenträger arbeitet und eine ungünstige thermische Beeinflussung der Borsten weitestgehend ausschließt.

Die Erfindung geht von einem Verfahren aus, bei dem die Befestigung der in die Aufnahmen des Borstenträgers eingeführten Borsten überwiegend durch Einwirken mechanischer Kräfte auf den Borstenträger an diesem befestigt werden, wobei Masse des Borstenträgers unter Verengung der Aufnahmen an die befestigungsseitigen Enden der Borsten diese seitlich umschließend verdrängt wird (z.B. US 5 224 763, 4 988 146). Ein solches Verfahren zeichnet sich erfindungsgemäß dadurch aus, daß nach dem Einführen der Borsten in die Aufnahmen der Borstenträger an seiner die Aufnahmen aufweisenden Oberfläche mit Druck derart beaufschlagt wird, daß der Borstenträger unter Reduzierung seiner Bauhöhe gestaucht und dabei die Masse unter Kaltfluß durch die bei Einwirken des Drucks aufgrund intermolekularer Reibung entstehenden Wärme verdrängt wird.

Das erfindungsgemäße Verfahren arbeitet zunächst ausschließlich mit mechanischem Druck, dessen Höhe und Einwirkungsdauer so gesteuert wird, daß der thermoplastische Kunststoff des Borstenträgers sich elastisch verformt, und zwar in die Bereiche, in die er ausweichen kann. Dies sind die Freiräume zwischen Borsten und Lochwandung. Dabei wird der Kunststoff durch Kaltfluß kombiniert mit einer durch intermolekulare Reibung verbundenen Erwärmung verformt und der Borstenträger in einem Ausmaß gestaucht, der dem verdrängten Volumen entspricht.

Der Borstenträger kann mit einem über die Oberfläche variierenden-Druck beaufschlagt werden, insbesondere wenn der Borstenbesatz aus Borstenbündeln verschiedenen Querschnitts besteht und am Borstenträger Aufnahmen mit entsprechend unterschiedlichem Querschnitt vorhanden sind, so daß bereichsweise unterschiedliche Massen verdrängt werden müssen. Durch eine hieran angepaßte Steuerung des Drucks läßt sich eine gleichmäßige Haltekraft an allen Bündeln und zudem eine ebene Oberfläche erzielen.

Diese Druckbeaufschlagung des Borstenträgers unter gleichzeitigem Stauchen desselben kann dadurch unterstützt werden, daß die die Aufnahmen aufweisende Oberfläche des Borstenträgers vor der Druckbeaufschlagung leicht erwärmt wird, wobei einerseits die Temperatur jedenfalls unterhalb der Schmelztemperatur liegen muß, andererseits die Erwärmung nur oberflächennah erfolgt. Eine solche gezielt niedrige und nur oberflächennahe Erwärmung kann auch im Bereich der Wandung der Aufnahmen vorgesehen sein.

Durch diese oberflächennahe und nur.in geringe Tiefe reichende Erwärmung auf eine moderate Temperatur unterhalb der Schmelztemperatur wird das Verdrängen des Kunststoffs an die befestigungsseitigen Enden der Borsten unterstützt, ohne daß die Borsten selbst eine nennenswerte Temperaturbeaufschlagung erfahren. Zugleich wird aber auch der Borstenträger in dem Bereich zwischen den Aufnahmen, wo er weiterhin als starrer Körper vorliegt, gestaucht und zur Seite hin, also an die befestigungsseitigen Enden der Borsten, verdrängt.

Die oberflächige Erwärmung der Borstenträgerfläche bzw. der Aufnahmen erfolgt vorzugsweise durch ein konturengleiches Heizelement und wiederum vorzugsweise berührungslos, so daß die Wärmeübertragung ausschließlich durch Strahlungswärme geschieht, wobei die sich am Borstenträger einstellende Temperatur durch die Temperatur des Heizelements einerseits, die Einwirkungsdauer und vor allem den Abstand des Heizelementes vom Borstenträger bzw. der Wandung der Aufnahmen sehr genau steuern läßt.

In praktischen Versuchen hat sich als Vorteil erwiesen, wenn zwischen dem Heizelement und den wärmeaufnehmenden Flächen am Borstenträger ein Luftspalt von wenigstens 0,05mm vorhanden ist, der andererseits nicht größer als 0,5mm sein sollte.

Ferner ist von Vorteil, wenn die Aufnahmen im Borstenträger einen Querschnitt aufweisen, der 100 bis 125% der Querschnittshüllfläche der aufgenommenen Borsten entspricht. Mit anderen Worten: Die Aufnahmen weisen vorzugsweise ein Übermaß gegenüber der Hüllfläche der Borsten in deren Querschnittsebene auf, so daß die Borsten beim Einführen die Wandung der Aufnahme gerade oder gar nicht berühren und die für ihre Befestigung notwendigen Umformkräfte ausschließlich auf den Borstenträger einwirken.

Weiterhin ist von Vorteil, wenn der Borstenträger mit Aufnahmen versehen wird, deren Tiefe bei Einsetzen einer Mehrzahl von Borsten in eine Aufnahme 50 bis 200% der Querschnittshüllfläche der Mehrzahl von Borsten entspricht, so daß die befestigungsseitigen Enden oberflächennah verankert werden und die Dicke des Borstenträgers entsprechend gering sein kann, was insbesondere bei Zahnbürsten erwünscht ist.

Wird der Borstenträger mit Aufnahmen für Einzelborsten versehen, beträgt die Tiefe vorzugsweise 200 bis 500% des Durchmessers der Einzelborste. Um Einzelborsten fest zu verankern, ist es zweckmäßig, sie zumindest am befestigungsseitigen Ende aufzurauhen oder zu profilieren.

Die Erwärmung von Kunststoff auf eine gefügeändernde Temperatur, also beispielsweise die Erweichungstemperatur, ist mit einer Volumenvergrößerung verknüpft. Wird die Wandung der Aufnahmen oberflächennah erwärmt, führt dieser Effekt zu einer Verengung des Lochquerschnitts. Das konturengleiche Heizelement bzw. der zwischen ihm und der Wandung der Aufnahme im kalten.Zustand bestehende Luftspalt werden vorzugsweise so ausgelegt, daß die Aufnahme beim Herausziehen des Heizelementes kalibriert wird, und zwar auf das oben wiedergegebene Maß von 100 bis 125% der Querschnittshüllfläche der aufzunehmenden Borsten.

Das Einführen der Borsten kann in bekannter Weise dadurch erleichtert werden, daß die Aufnahmen am Borstenträger mit einer Einlaufkontur versehen werden.

In weiterhin vorteilhafter Ausführung ist vorgesehen, daß der Druck und die Temperatur so gesteuert werden, daß das zwischen den Borsten und der Wandung der Aufnahmen vorhandene freie Volumen mit der verdrängten Kunststoffmasse gefüllt wird, ohne daß diese über die Oberfläche des Borstenträgers aufsteigt.

Diese Verfahrensführung ist erfindungsgemäß insbesondere dadurch möglich, daß an keiner Stelle das Borstenträgers Kunststoffschmelze entsteht und die nur oberflächennah erweichten Bereiche ein sehr geringes Gesamtvolumen aufweisen.

Um ein unkontrolliertes Verformen des Borstenträgers nach außerhalb des Borstenbesatzes zu vermeiden, wird der Borstenträger während der Druckbeaufschlagung den gesamten Borstenbesatz umgebend abgedichtet, so daß der plastifizierte Kunststoff nicht nach außerhalb verdrängt werden kann.

In weiterhin vorteilhafter Ausführung des Verfahrens werden die befestigungsseitigen Enden der Borsten durch Strahlungswärme berührungslos erwärmt. Im Falle von Einzelborsten, die einzeln in Aufnahmen des Borstenträgers eingesetzt werden, kann durch die Erwärmung eine Verdickung erzeugt werden. Bei Zusammenfassung mehrerer Borsten zu Bündeln beliebiger Querschnittsform werden die befestigungsseitigen Enden der Borsten durch das Erwärmen miteinander verschmolzen. Dabei kann die Erwärmung so geführt werden oder ein Nachformen im geschmolzenen Bereich so erfolgen, daß eine plattenförmige Verbindung am Bündelfuß entsteht, die den Bündelquerschnitt nicht überragt. Gleichermaßen kann aber auch eine, gegebenenfalls plattenförmige, Verbindung mit Überstand über die Querschnittshüllfläche des Bündels erzeugt werden.

Sofern innerhalb eines Borstenbesatzes Bündel mit unterschiedlicher Querschnittsfläche eingesetzt werden, kann es sich empfehlen, die Erwärmung der befestigungsseitigen Enden mittels Strahlungswärme im Bereich der Bündel mit größerem Querschnitt zusätzlich durch eine Heißgasbeaufschlagung zu unterstützen, um sämtliche Bündel des Borstenbesatzes gleichzeitig und im gleichen Ausmaß an ihren befestigungsseitigen Enden aufzuschmelzen. Dieses Verfahren gibt ferner die Möglichkeit, unabhängig von verschiedenen Querschnittsflächen der Bündel Vorsorge dafür zu treffen, daß die aufgeschmolzene Masse nur eine plattenförmige Verbindung ohne Überstand eingeht oder aber eine den Bündelquerschnitt überragende Verdikkung durch molekulare Reorientierung entsteht.

In allen Fällen wird die Erwärmung so geführt, daß sich eine Verdickung ausbildet, deren Querschnitt gleich oder wenig größer ist als der kalibrierte Querschnitt der oberflächennah erwärmten Aufnahmen des Borstenträgers.

Zur Durchführung des Verfahrens können im wesentlichen herkömmliche Vorrichtungen mit Halte- und Positioniereinrichtungen für die Borsten, Haltern oder Aufnahmen für den Borstenträger, Heizelementen für den Borstenträger und/oder die befestigungsseitigen Enden der Borsten vorgesehen werden. Solche bekannten Halte- und Positioniereinrichtungen werden an das erfindungsgemäße Verfahren in besonders vorteilhafter Weise dadurch angepaßt, daß die Borsten in fluchtenden Führungsbohrungen mehrfach geschichteter dünner Platten einer Klemmeinrichtung angeordnet sind und mit ihren befestigungsseitigen Enden eine der außenliegenden Platten überragen, wobei eine der Platten parallel zu den anderen unter Klemmen der Borsten verschiebbar und festsetzbar ist. Die Führungsbohrungen sind in einem Raster angeordnet, das dem Raster der Aufnahmen am Borstenträger entspricht. Die Klemmeinrichtung dient zugleich zur Druckbeaufschlagung des Borstenträgers.

Auf diese Weise lassen sich die Borsten als Einzelborsten, Borstenbündel oder beliebig geformte Borstenzonen einwandfrei positionieren und fixieren, um sie mit ihren befestigungsseitigen Enden toleranzarm in die vorbereiteten Aufnahmen des Borstenträgers bis in die gewünschte Tiefe einführen zu können. Ferner können die Borsten an ihren befestigungsseitigen Enden vor dem Einführen in die Aufnahmen erwärmt, gegebenenfalls aufgeschmolzen werden.

Vorzugsweise ist die verschiebbare Platte selbsthemmend festgesetzt, wozu sich insbesondere ein auf einer Schmalseite der Platte einwirkender Keil anbietet.

Die Klemmeinrichtung ist vorteilhaft dazu geeignet, zugleich zur Druckbeaufschlagung des Borstenträgers zu dienen, so daß im Fertigungsprozeß die Borsten zunächst in die Führungsbohrungen der Klemmeinrichtung eingeführt, mittels der Klemmplatte fixiert, anschließend an ihren überragenden Enden gegebenenfalls erwärmt und daraufhin mit den befestigungsseitigen Enden in die Aufnahmen des Borstenträgers bis in die gewünschte Tiefe eingeführt werden. Danach schließt sich dann unmittelbar die Druckbeaufschlagung des Borstenträgers mittels der vorlaufenden Platte der Klemmeinrichtung an, wobei die Klemmplatte vorher gelöst wird, so daß sich die Führungsbohrung über die Borste schieben kann.

Vorzugsweise sind die Führungsbohrungen in einem Lochbild angeordnet, das der Stellung der Borsten bzw. der Bündel an der fertigen Borstenware entspricht, so daß der gesamte Borstenbesatz der Borstenware in einem Zug vorgefertigt und anschließend befestigt wird.

Die Platten weisen eine Dicke zwischen 0,1 und 1,0mm auf. Die Führungsbohrungen, insbesondere wenn sie für Einzelborsten oder Bündel kleinen Durchmessers bestimmt sind, sind vorzugsweise durch Laserstrahlen erzeugt.

Die Klemmeinrichtung kann ferner als Borstenhalter dienen, um die Borsten an ihren gegenüberliegenden, nutzungsseitigen Enden zu bearbeiten, insbesondere zu verrunden. Auch können einzelne Borsten oder der gesamte Borstenbesatz an den nutzungsseitigen Enden mit einer Topographie versehen werden, indem die Borsten nach dem Bearbeiten der Enden und Lösen der Klemmeinrichtung axial gegeneinander verschoben werden, so daß ihre Enden in einer von der Ebene abweichenden Hüllfläche liegen.

Zum Erwärmen der befestigungsseitigen Enden der Borsten des gesamten Borstenbesatzes ist ein ebener Strahlungsheizkörper vorgesehen, der dann, wenn Bündel verschiedener Querschnitte innerhalb des Borstenbesatzes angeordnet sind, im Bereich der Bündel mit größerem Querschnitt zusätzlich einen Kanal zur Durchführung von Heißgas aufweist. Der Strahlungsheizkörper ist vorzugsweise konturengleich der Oberfläche des Borstenträgers und der Aufnahmen ausgebildet.

Auf diese Weise ist gewährleistet, daß alle Bündel unabhängig von ihrer Querschnittsform gleichzeitig mit ausreichend Wärme beaufschlagt werden, um die befestigungsseitigen Enden zu verschmelzen und gegebenenfalls mit einer sie zusammenhaltenden Platte oder Verdickung auszustatten.

Nachstehend ist die Erfindung anhand einiger in der Zeichnung wiedergegebener Ausführungsbeispiele beschrieben. In der Zeichnung zeigen:
- Fig. 1 bis 6: verschiedene Verfahrensstufen bei der Herstellung einer Borstenware mit mehreren Borstenbündeln, teilweise im Schnitt;
- Fig. 7 bis.12: die gleichen Verfahrensstufen bei der Herstellung einer Borstenware mit Einzelborsten, teilweise im Schnitt;
- Fig. 13: einen vergrößerten Detailschnitt im Bereich zweier benachbarter Bündel;
- Fig. 14 bis 17: eine schematische Darstellung verschiedener Verfahrensstufen im vergrößerten Detailschnitt;
- Fig. 18 und 19: eine schematische Darstellung der beiden letzten Verfahrensstufen bei der Herstellung von Borstenwaren mit Einzelborsten, teilweise im Schnitt;
- Fig. 20: eine Draufsicht auf den Borstenbesatz einer Zahnbürste;
- Fig. 21: eine Vorrichtung zum Erwärmen der Borstenenden des Borstenbesatzes gemäß Fig. 20;
- Fig. 22: eine Ansicht auf eine Klemmeinrichtung;
- Fig. 23: einen Schnitt XXIII-XXIII gemäß Fig. 22;
- Fig. 24: einen Schnitt XXIV-XXIV gemäß Fig. 22 und
- Fig. 25: einen der Fig. 24 entsprechenden Schnitt einer anderen Ausführungsform der Klemmeinrichtung.

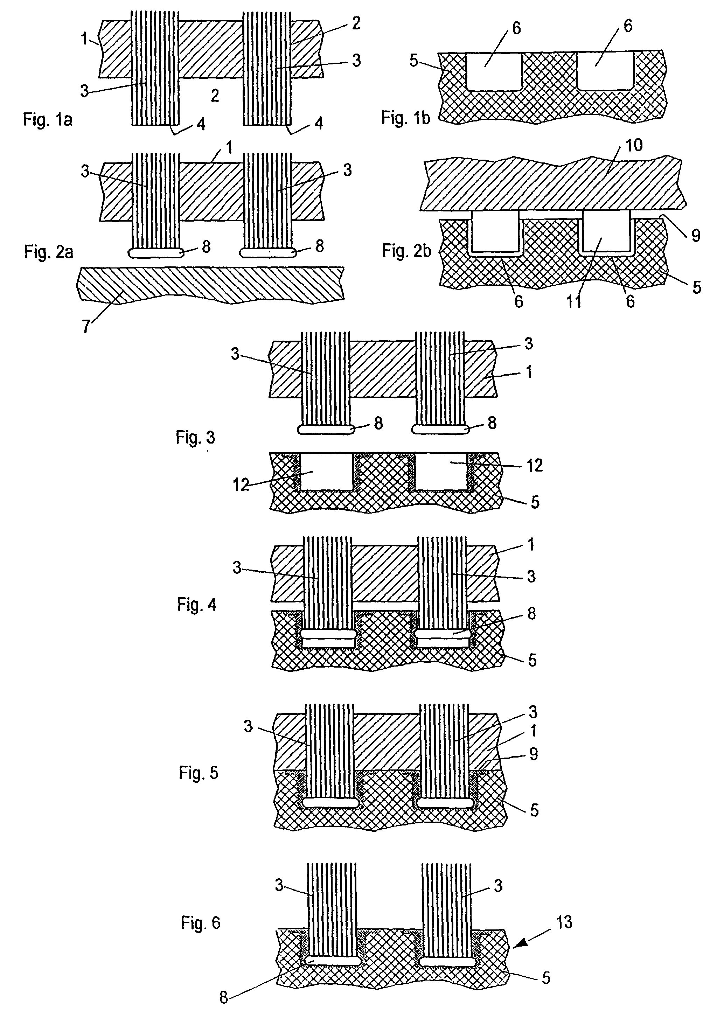

Fig. 1a zeigt einen Halter 1, der in parallelen Führungsbohrungen 2 je ein Borstenbündel aufnimmt, dessen Borsten 3 mit ihren befestigungsseitigen Enden 4 den Halter 1 überragen. Fig. 1b zeigt einen Ausschnitt eines Borstenträgers 5, der beispielsweise durch Spritzgießen hergestellt und vorgeformte Aufnahmen 6 für die Borstenbündel 3 aufweist, die als Sacklöcher ausgebildet sind. Fig. 1a und 1b geben den Ausgangszustand des Verfahrens wieder, wobei der Borstenträger 5 in eine nicht gezeigte ortsfeste Aufnahme eingesetzt oder eingelegt ist.

In der nächsten Stufe (Fig. 2a) werden die befestigungsseitigen Enden 4 der Bündel 3 mittels eines Heizelementes 7, vorzugsweise durch Strahlung, angeschmolzen, so daß sich eine plattenförmige Verdickung 8 bildet, über die die einzelnen Borsten der Bündel 3 miteinander verbunden sind. Beim gezeigten Ausführungsbeispiel weist die durch das Anschmelzen erhaltene Platte einen Überstand gegenüber dem Bündel 3 auf. Bei dem gezeigten Ausführungsbeispiel werden gleichzeitig mit der Verfahrensstufe gemäß Fig. 2a oder unmittelbar danach die Aufnahmen 6 des Borstenträgers 5 und die die Aufnahmen aufweisende Oberfläche 9 des Borstenträgers 5 oberflächennah erwärmt. Hierzu dient ein Heizelement 10 mit Heizstiften 11.. Die der Borstenträger-Oberfläche 9 zugekehrte Fläche des Heizelementes 10 und die Heizstifte 11 bilden also bezüglich der Borstenträger-Oberseite eine konturengleiche Form. Die Heizstifte 11 tauchen bis auf einen Luftspalt von größer 0,05mm in die Aufnahmen 6 ein. Ein etwas größerer Luftspalt wird zwischen der Oberfläche 9 des Borstenträgers 5 und der dieser zugekehrten Oberfläche des Heizelementes 10 eingehalten.

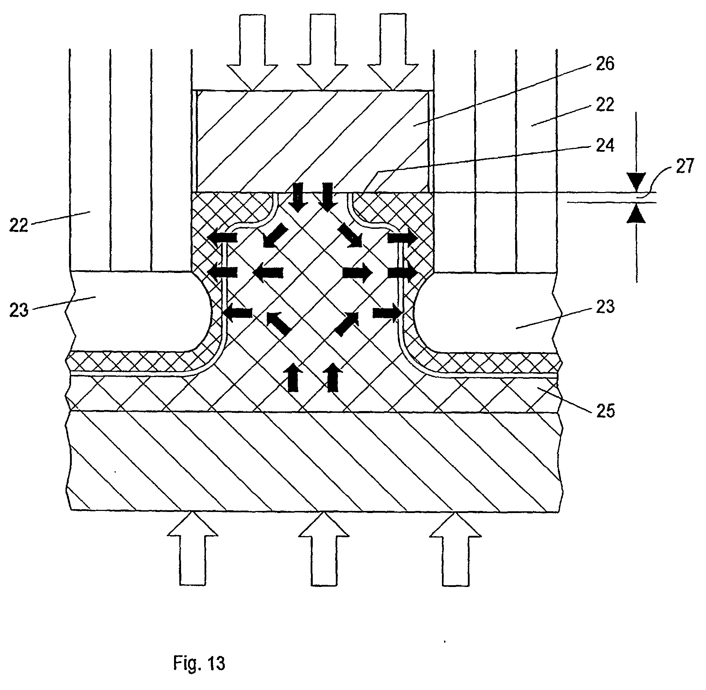

Beim oberflächennahen Aufwärmen der Borstenträger-Oberfläche 9 und der Aufnahmen 6 an deren Wandung und Boden wird der Borstenträger 5 aus thermoplastischem Kunststoff bis auf wenige Zehntelmillimeter Tiefe erweicht, ohne den Kunststoff zu schmelzen. Die erweichten Zonen sind mit enger Schraffur (Fig. 3) erkennbar. Da das Erweichen des thermoplastischen Kunststoffs mit einer. Volumenvergrößerung einhergeht, verengt sich der Querschnitt der Aufnahme 6, so daß der erweichte Kunststoff an den Heizstiften 11 zur Anlage kommt. Beim Herausziehen des Heizelementes 10, bei dem die Heizstifte 11 herausfahren, wird das entstehende Loch 12 mit engerem Querschnitt als die Aufnahme 6 kalibriert. Anschließend wird der Halter 1 mit den Borstenbündeln 3 und den vorlaufenden plattenförmigen Verdickungen 8 in Richtung auf den Borstenträger 5 bewegt, bis die Verdickungen 8 in die Löcher 12 eintauchen und über ein Zwischenstadium gemäß Fig. 4 schließlich ihre Endposition gemäß Fig. 5 erreichen. Der dabei von dem Halter 1 auf die Oberfläche 9 des Borstenträgers 5 ausgeübte Druck wird so gesteuert, daß der gesamte Borstenträger 5 in Richtung der nicht gezeigten Aufnahme gestaucht wird (hierzu siehe später Fig. 13). Nach Abziehen des Halters 1 von den Borstenbündeln 3 kann die fertige Borstenware aus seiner Aufnahme entnommen werden. Da der Kunststoff nur in einen weichen, nicht jedoch schmelzflüssigen Zustand überführt wird, kühlen die erweichten Bereiche schnell ab und kann die fertige Borstenware 13 kurzfristig entnommen werden. Dadurch ergeben sich in einer automatischen Fertigung hohe Taktzeiten. Vor allem aber wird die Molekularstruktur der Borsten im Bereich ihrer Einbindung im Borstenträger im Bereich oberhalb der Verdickung 8 bis zur Oberfläche des Borstenträgers 5 nicht geschädigt.

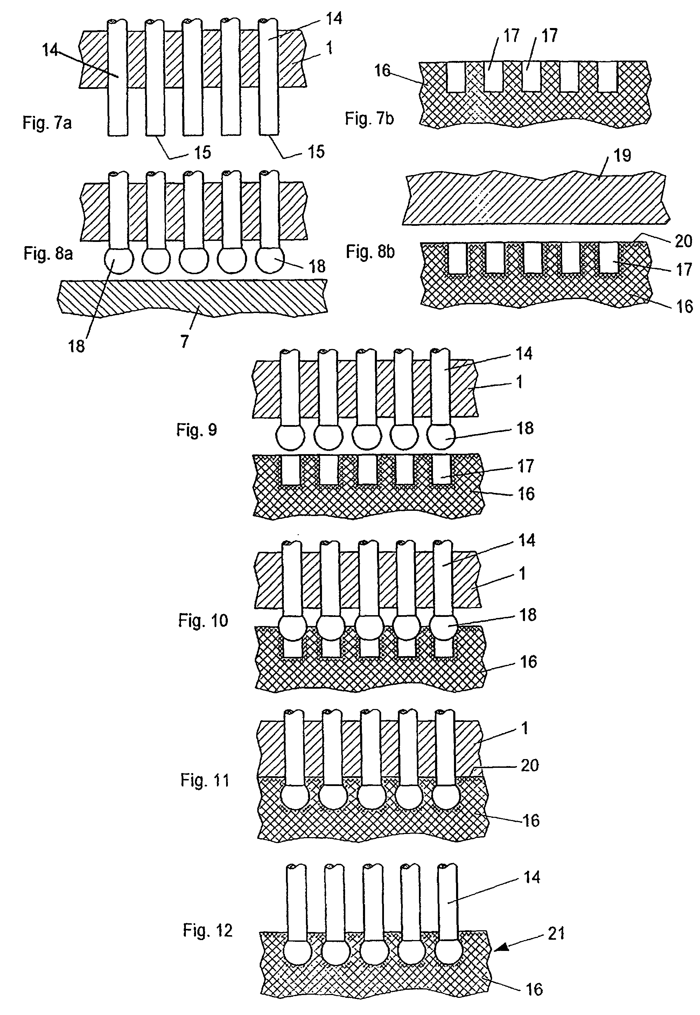

Fig. 7 bis 12 zeigen den gleichen Verfahrensablauf bei der Herstellung einer Borstenware mit einzeln stehenden Borsten 14. Ein Halter 1 weist wiederum Führungsbohrungen auf, in die aber jeweils nur einzelne Borsten 14 eingesetzt ist, die mit ihren befestigungsseitigen Enden 15 den Halter 1 überragen. Der spritzgegossene Borstenträger 16 gemäß Fig. 7b besteht wiederum aus einem thermoplastischen Kunststoff und ist mit Aufnahmen in Form von Sacklöchern 17 versehen, deren Durchmesser an den Durchmesser der Einzelborste 14 angepaßt ist.

Die befestigungsseitigen Enden 15 der Einzelborsten 14 werden gemäß Fig. 8a mittels eines Heizelementes 7 zu kugelförmigen Verdickungen 18 aufgeschmolzen. In gleicher Weise wird mittels eines flächigen Heizelementes 19 der Borstenträger 16 an seiner Oberfläche 20 und im Bereich der Löcher 17 oberflächennah erwärmt und erweicht.

Im weiteren Verfahrensablauf (Fig. 9 bis 11) werden die Einzelborsten 14 mit den vorlaufenden Verdickungen 18 mittels des Halters 1 in die Löcher 17 am Borstenträger 16 eingeführt, bis sie schließlich auf dem Lochgrund aufstoßen und der Borstenträger 16 durch Druckbeaufschlagung mittels des Halters 1 an seiner Oberfläche 20 gestaucht wird. Fig. 12 zeigt wiederum einen Ausschnitt der fertigen Borstenware 21 bestehend aus dem Borstenträger 16 und solitär angeordneten Einzelborsten 14.

Fig. 13 zeigt in vergrößertem Maßstab den Vorgang des Stauchens des Borstenträgers im Bereich benachbarter Bündel 22, die mit ihrer Verdickung 23 am befestigungsseitigen Ende bereits in den Löchern eingebettet sind. Der oberflächennah im Bereich der Oberfläche 24 des Borstenträgers 25 und im Bereich des Lochs erweichte Kunststoff ist durch Kreuzschraffur angedeutet. Gegen Ende des Fügevorgangs kommt der Halter 26 in Kontakt mit der Oberfläche 24 des Borstenträgers 25. Durch weitere Druckbeaufschlagung und die an der Aufnahme entstehenden Reaktionskräfte, die mit den Richtungspfeilen angedeutet ist, wird der Borstenträger 25 um das Maß 27 gestaucht. Dabei wird nicht nur die oberflächennah erweichte Kunststoffmasse an das befestigungsseitige Ende der Borsten, insbesondere im Bereich der Verdickung 23 und unmittelbar oberhalb dieser verdrängt, sondern auch die starre Masse zwischen den Löchern durch Kaltverformen nach unten und außen verformt, wodurch sich die Druckkräfte in Richtung auf den eingebetteten Bereich der Borstenbündel 22 verstärken.

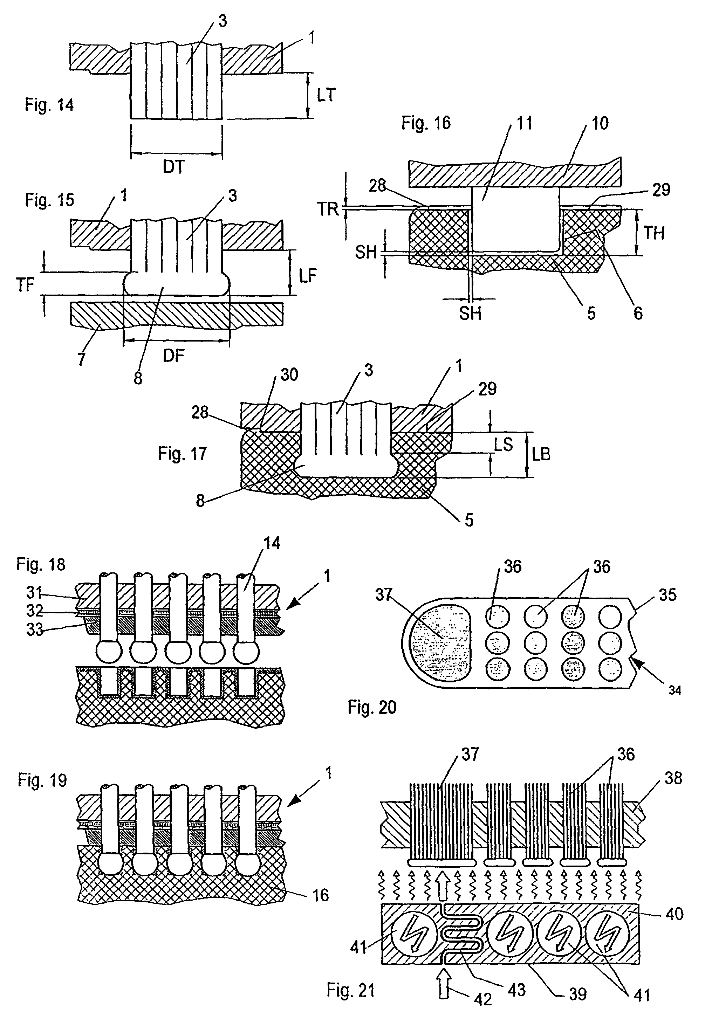

Anhand der vergrößerten Darstellungen in Fig. 14 bis 17 wird auf die geometrischen Verhältnisse an einem Beispiel näher eingegangen. Das am Halter 1 sitzende Bündel 3 weist einen Durchmesser DT auf, der beispielsweise 1,50mm betragen kann. Die überstehende Länge LT am befestigungsseitigen Ende des Bündels 3 kann beispielsweise 1,75 bis 2,25mm betragen.

Beim Anschmelzen der befestigungsseitigen Enden der Borsten des Bündels 3 verkürzt sich deren Länge aufgrund molekularer Reorientierung, so daß die am Halter 1 überstehende Länge LF<LT etwa 1,60 bis 2,00mm beträgt. Die beim Anschmelzen entstehende plattenförmige Verdickung 8 weist einen Durchmesser DF auf, der um 0,10 bis 0,40mm größer ist als der Ausgangsdurchmesser DT des Bündels 3.

In Fig. 16 sind die Verhältnisse am Borstenträger 5 gezeigt. Bei diesem Ausführungsbeispiel weist der Borstenträger 5 an seinem Umfang einen den gesamten Borstenbesatz umfassenden niedrigen Rand 28 auf, dessen Höhe TR beispielsweise 0,05 bis 0,03mm beträgt. Die Oberfläche 29 des Borstenträgers 5 ist also gegenüber dem Rand 28 etwas eingesenkt. Die Tiefe TH der Löcher 6 gegenüber der Borstenträger-Oberfläche 29 beträgt etwa 0,10 bis 0,50mm.

Beim Eintauchen der Heizstifte 11 des Heizelementes 10 in die Löcher 6 verbleibt gegenüber der Lochwandung und dem Lochgrund ein Luftspalt SH von 0,05 bis 0,50mm. Nach dem Herausziehen des Heizelementes 10 mit den Heizstiften 11 wird die zuvor erweichte und den Querschnitt des Lochs 11 verengende Masse kalibriert und wird anschließend das Bündel 3 mit der vorlaufenden Platte 8 in den Borstenträger 5 eingeführt. Die gesamte Einbettungslänge LB beträgt ca. 1,60 bis 2,00mm, während die Bandagierung der Borsten des Bündels 3 oberhalb der verdickten Platte 8 eine Höhe LS von 0,50 bis 1,50mm aufweist. Bei dem gezeigten Ausführungsbeispiel weist der Halter 1 in seinem Randbereich eine Stufe 30 auf, die mit dem erhöhten Rand 28 am Borstenträger 5 korrespondiert. Dadurch wird der Raum oberhalb der Borstenträgeroberfläche 29 nach außen abgedichtet, was die Planierung der Borstenträgeroberfläche 29 beim Stauchen des Borstenträgers 5 begünstigt.

Bei der Herstellung einer Borstenware mit Einzelborsten gemäß Fig. 18 und 19 sitzen die Einzelborsten 14 in einem Halter 1, der aus mehreren parallelen Platten 31, 32 und 33 besteht. Die Platten 31 bis 33 weisen fluchtende Führungsbohrungen auf, die jeweils eine Einzelborste 14 aufnehmen. Eine der Platten, beispielsweise die mittlere Platte 32, dient als Klemmplatte, indem sie parallel zu den beiden anderen Platten 31, 33 verschiebbar ist. Beim Fügevorgang wird der Halter mit den drei Platten als Druckplatte verwendet, um den Borstenträger 16 am Ende des Fügevorgangs zu stauchen.

Fig. 20 zeigt eine Ansicht auf einen Borstenbesatz einer nur teilweise im Bereich des Kopfs 35 gezeigten Zahnbürste 34. Der Borstenbesatz besteht bei diesem Ausführungsbeispiel aus in parallelen Reihen angeordneten runden Bündeln 36 und einem am Ende. des Kopfs 35 angeordneten, paketartigen Bündel 37 mit wesentlich größerem Querschnitt. Für diese Ausführung ist ein Halter 38 vorgesehen, der Führungsbohrungen mit unterschiedlichem Querschnitt aufweist, nämlich solchen für die Bündel 36 und einer einzigen Führungsbohrung für das paketartige Bündel 37. Die Bündel überragen den Halter 38 mit ihren befestigungsseitigen Enden, an denen sie mittels eines Heizelementes 39 aufgeschmolzen und zu plattenförmigen Verdickungen umgeformt werden. Das Heizelement 39 besteht aus einem Heizblock 40 mit beispielsweise eingesetzten elektrischen Heizkörpern 41, die den Block 40 erwärmen, der seinerseits die Wärme in Form von Strahlungswärme in Richtung auf die befestigungsseitigen Enden der Bündel 36, 37 abgibt. Da am Bündel 37 eine wesentlich größere Kunststoffmasse zu erschmelzen ist, weist das Heizelement 39 im Bereich dieses Bündels zusätzlich einen Kanal 42 auf, durch den Heißluft 43 in Richtung auf die befestigungsseitigen Enden des Bündels 37 hindurchgeleitet wird. Durch diese zusätzliche Wärmeenergie ist gewährleistet, daß alle Bündel 36 und 37 gleichmäßig in gleicher Zeit erwärmt werden. Dadurch werden insbesondere örtliche Überhitzungen oder ein unzureichendes Aufschmelzen der befestigungsseitigen Enden der Borsten vermieden.

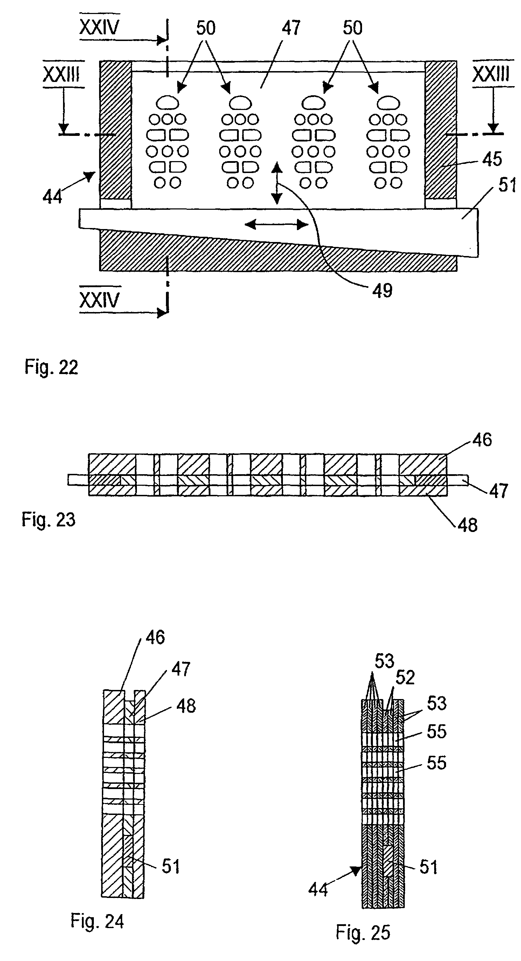

Fig. 22 bis 24 zeigen eine Ausführungsform eines weiteren Teils der Vorrichtung, nämlich eines Halters in Form einer Klemmeinrichtung 44. Die Klemmeinrichtung weist einen Rahmen 45 auf, in den drei parallele Platten 46, 47 und 48 (siehe Fig. 23 und 24) eingelegt sind. Eine der Platten, beim gezeigten Ausführungsbeispiel die Platte 47, ist gegenüber den beiden anderen Platten 46, 48 parallel verschiebbar, wie mit dem Pfeil 49 angedeutet. Die Klemmeinrichtung 44 gemäß Fig. 22 nimmt den Borstenbesatz für insgesamt vier Bürsten auf. Die Platten 46, 47 und 48 weisen zu diesem Zweck jeweils ein Lochbild 50 auf, bei dem die einzelnen Löcher in ihrem Querschnitt dem Querschnitt der von ihnen aufgenommenen Bündel entsprechen. Der verschiebbaren Platte 47 ist ein querbeweglicher Keil 51 zugeordnet, der selbsthemmend in einer entsprechenden Führung des Rahmens 45 geführt ist. Bei Eintreiben des Keils 51 nach links werden sämtliche Bündel in den Löchern gemäß dem Lochbild 50 geklemmt und fest positioniert, so daß sie axial nicht verrutschen können. Im gekennzeichneten Zustand können die Borsten an ihren nutzungsseitigen Enden bearbeitet, z.B. verrundet, und gegebenenfalls nach Lösen der Klemmeinrichtung 44 axial gegeneinander verschoben werden, um diese Enden in eine nicht-ebene Hüllfläche zu verschieben. Nach erneutem Klemmen werden gegebenenfalls die befestigungsseitigen Enden aufgeschmolzen und miteinander verbunden, um anschließend die Bündel in die Löcher des Borstenträgers einzuführen.

In bevorzugter Ausführung besteht die Klemmeinrichtung 44 aus einer Vielzahl paralleler Platten, wie dies in Fig. 25 gezeigt ist. In diesem Fall sind vier bzw. zwei parallele Platten 52 jeweils ortsfest angeordnet, während die beiden dazwischen liegenden Platten 53 mittels des Keils 54 verschiebbar sind. Die Platten weisen eine Dicke von 0,1 bis 1,0mm auf. Durch diese geringe Dicke lassen sich die Führungsbohrungen 55 mit höchster Präzision durch Laserschneiden erzeugen, insbesondere auch Bohrungen mit minimalem. Durchmesser, wie dies beispielsweise bei Einzelborsten (Fig. 7 bis 12) erforderlich ist.

Die Aufnahmen bzw. Löcher 6 am Borstenträger 5 (Fig. 1 bis 6) können gegenüber der ebenen Oberfläche des Borstenträgers auchunter einem von 90° verschiedenen Winkel angeordnet sein, wobei die Bündel 3 in gleicher Weise eingesetzt, jedoch entsprechend der Lochachse abgelenkt werden, so die Bündel nach dem Abziehen des Halters schräg zur Oberfläche des Borstenträgers stehen.

## Patentansprüche

1. Verfahren zur Herstellung von Borstenwaren, indem ein Borstenträger (5) aus thermoplastischem Kunststoff mit Aufnahmen (6) für die Borsten (3) hergestellt, die Borsten mit ihren befestigungsseitigen Enden (4) in die Aufnahmen (6) eingeführt und durch Einwirken mechanischer Kräfte auf den Borstenträger (5) an diesem befestigt werden, wobei Masse des Borstenträgers unter Verengung der Aufnahmen (6) an die befestigungsseitigen Enden (4) der Borsten (3) diese seitlich umschließend verdrängt wird, **dadurch gekennzeichnet, daß** der Borstenträger (5) nach dem Einführen der Borsten (3) in die Aufnahmen (6) an seiner die Aufnahmen aufweisenden Oberfläche (9) derart mit Druck beaufschlagt wird, **daß** der Borstenträger (5) unter Reduzierung seiner Bauhöhe gestaucht und dabei die Masse durch Kaltfluß und durch die bei Einwirken des Drucks aufgrund intermolekularer Reibung entstehende Wärme verdrängt wird..

2. Verfahren nach Anspruch 1, **dadurch gekennzeichnet, daß** der Borstenträger (5) mit einem über die Oberfläche variierenden Druck beaufschlagt wird.

3. Verfahren nach Anspruch 1 oder 2, **dadurch gekennzeichnet, daß** der Druck in Abhängigkeit von dem Querschnitt der Aufnahmen (6) gesteuert wird.

4. Verfahren nach einem der Ansprüche 1 bis 3, **dadurch gekennzeichnet, daß** die die Aufnahmen (6) aufweisende Oberfläche (9) des Borstenträgers (5) zur Unterstützung der Verdrängung der Borstenträgermasse vor der Druckbeaufschlagung nur oberflächennah auf eine den thermoplastischen Kunststoff des Borstenträgers (5) erweichende Temperatur unterhalb der Schmelztemperatur erwärmt wird.

5. Verfahren nach einem der Ansprüche 1 bis 4, **dadurch gekennzeichnet, daß** die Aufnahmen (6) am Borstenträger (5) oberflächennah auf eine Temperatur unterhalb der Schmelztemperatur des Kunststoffs erwärmt wird.

6. Verfahren nach Anspruch 4 oder 5, **dadurch gekennzeichnet, daß** bei der Druckbeaufschlagung nicht nur Masse aus den erwärmten Bereichen verdrängt, sondern der Borstenträger (5) auch im starren Bereich zwischen den Aufnahmen (6) gestaucht wird.

7. Verfahren nach einem der Ansprüche 4 bis 6, **dadurch gekennzeichnet, daß** der Borstenträger (5) und seine Aufnahmen (6) mit einem konturengleichen Heizelement (10) erwärmt werden.

8. Verfahren nach Anspruch 7, **dadurch gekennzeichnet, daß** der Borstenträger (5) und seine Aufnahmen (6) mit dem Heizelement (10) berührungslos erwärmt werden.

9. Verfahren nach Anspruch 7 oder 8, **dadurch gekennzeichnet, daß** zwischen dem Heizelement (10) und den wärmeaufnehmenden Flächen ein Luftspalt zwischen 0,05mm und 0,5mm eingehalten wird.

10. Verfahren nach einem der Ansprüche 1 bis 9, **dadurch gekennzeichnet, daß** der Borstenträger (5) mit Aufnahmen (6) versehen wird, deren Querschnitt 100 bis 125% der Querschnittshüllfläche der aufgenommenen Borsten (3) entspricht.

11. Verfahren nach einem der Ansprüche 1 bis 10, **dadurch gekennzeichnet, daß** der Borstenträger (5) mit Aufnahmen (6) versehen wird, deren Querschnitt 100 bis 125% der Querschnittshüllfläche am befestigungsseitigen Ende (4) der aufgenommenen Borsten (3) entspricht.

12. Verfahren nach einem der Ansprüche 1 bis 11, **dadurch gekennzeichnet, daß** der Borstenträger (5) mit Aufnahmen (6) versehen wird, deren Tiefe bei Einsetzen einer Mehrzahl von Borsten (3) in eine Aufnahme 50 bis 200% der Querschnittshüllfläche der Mehrzahl von Borsten (3) entspricht.

13. Verfahren nach einem der Ansprüche 1 bis 12, **dadurch gekennzeichnet, daß** der Borstenträger (16) mit Aufnahmen (17) für Einzelborsten (14) und dann mit einer Tiefe versehen wird, die 200 bis. 500% des Durchmessers der Einzelborste (14) entspricht.

14. Verfahren nach einem der Ansprüche 7 bis 9, **dadurch gekennzeichnet, daß** die oberflächennah erweichten Aufnahmen (5) beim Herausziehen des Heizelements (10) kalibriert werden.

15. Verfahren nach einem der Ansprüche 1 bis 14, **dadurch gekennzeichnet, daß** die Aufnahmen (6) am Borstenträger (5) mit einer Einlaufkontur für die befestigungsseitigen Enden (4) der Borsten (3) versehen werden.

16. Verfahren nach einem der Ansprüche 4 bis 15, **dadurch gekennzeichnet, daß** Druck und Temperatur so gesteuert werden, **daß** das zwischen den Borsten (3) und der Wandung der Aufnahmen (6) vorhandene freie Volumen mit der verdrängten Kunststoffmasse gefüllt wird, ohne **daß** diese über die Oberfläche (9) des Borstenträgers (5) aufsteigt.

17. Verfahren nach einem der Ansprüche 1 bis 16, **dadurch gekennzeichnet, daß** der Borstenträger (5) während der Druckbeaufschlagung den gesamten Borstenbesatz umgebend abgedichtet wird, so **daß** plastifizierter Kunststoff nicht nach außen verdrängt wird.

18. Verfahren nach einem der Ansprüche 1 bis 17, **dadurch gekennzeichnet, daß** die befestigungsseitigen Enden (4) der Borsten (3) durch Strahlungswärme berührungslos erwärmt werden.

19. Verfahren nach Anspruche 18, **dadurch gekennzeichnet, daß** zumindest ein Teil der befestigungsseitigen Enden (4) unterstützend durch Heißgas erwärmt wird.

20. Verfahren nach Anspruch 19, **dadurch gekennzeichnet, daß** bei Borstenbündeln (36, 37) unterschiedlichen Querschnitts diejenigen mit größerem Querschnitt unterstützend mit Heißgas erwärmt werden.

21. Verfahren nach einem der Ansprüche 18 bis 20, **dadurch gekennzeichnet, daß** bei zu Bündeln zusammengefaßten Borsten (3) deren befestigungsseitige Enden (4) miteinander verschmolzen werden.

22. Verfahren nach Anspruch 21, **dadurch gekennzeichnet, daß** die sich beim Verschmelzen der befestigungsseitigen Enden (4) bildende Kunststoffmasse geformt wird.

23. Verfahren nach Anspruch 22, **dadurch gekennzeichnet, daß** die sich beim Verschmelzen der befestigungsseitigen Enden (4) bildende Kunststoffmasse in Relation zum Durchmesser der Aufnahmen (6) kalibriert wird.

24. Verfahren nach einem der Ansprüche 1 bis 23, **dadurch gekennzeichnet, daß** die befestigungsseitigen Enden (4) der Borsten (3) derart aufgeschmolzen werden, **daß** sich durch molekulare Reorientierung Verdickungen (8) ausbilden.

25. Verfahren nach Anspruch 24, **dadurch gekennzeichnet, daß** die Verdickung (8) so ausgebildet wird, **daß** ihr Querschnitt gleich oder wenig größer ist als der kalibrierte Querschnitt der oberflächennah erwärmten Aufnahmen (6) des Borstenträgers (5).

## Claims

1. Method for the manufacture of brushware, in that a thermoplastic material bristle carrier (5) is manufactured with receptacles (6) for the bristles (3), the fastening-side ends (4) of the bristles are inserted in the receptacles (6) and through the action of mechanical forces on the bristle carrier (5) are fixed thereto, wherein the bristle carrier mass is displaced, accompanied by a narrowing of the receptacles (6) at the fastening-side ends (4) of the bristles (3) so as to laterally embrace the latter, **characterized in that**, following the insertion of the bristles (3) the into receptacles (6), the bristle carrier (5) is pressurized on its surface (9) having the receptacles in such a way that, accompanied by a reduction of its overall height, the bristle carrier (5) is compressed and the mass is displaced by cold flow in response to the effect of the pressure and in consequence of warmth resulting from intermolecular fraction.

2. Method according to claim 1, **characterized in that** the bristle carrier (5) is subject to a pressure varying over the surface.

3. Method according to one claim 1 or 2, **characterized in that** the pressure is controlled as a function of the cross-section of the receptacles (6).

4. Method according to one of the claims 1 to 3, **characterized in that** the surface (9) of the bristle carrier (5) having the receptacles (6) is only heated close to the surface to a temperature softening the thermoplastic material of the bristle carrier (5) but which is below the melting point, in order to aid the displacement of the bristle carrier mass prior to pressurization.

5. Method according to one of the claims 1 to 4, **characterized in that** the receptacles (6) at the bristle carrier (5) are heated close to the surface to a temperature below the melting point of the plastic.

6. Method according to one of the claims 4 or 5, **characterized in that** during pressurization not only is the material displaced from the heated areas, but the bristle carrier (5) is also compressed in the rigid area between the receptacles (6).

7. Method according to one of the claims 4 to 6, **characterized in that** the bristle carrier (5) and its receptacles (6) are heated with an equicontour heating element (10).

8. Method according to claim 7, **characterized in that** the bristle carrier (5) and its receptacles (6) is heated in contactless manner with the heating element (10).

9. Method according to claims 7 or 8, **characterized in that** an air gap between 0.05 and 0.5 mm is maintained between the heating element (10) and the heat-absorbing surfaces.

10. Method according to one of the claims 1 to 9, **characterized in that** the bristle carrier (5) is provided with receptacles (6), whose cross-section corresponds to 100 to 125% of the cross-sectional envelope of the bristles (3) received.

11. Method according to one of the claims 1 to 10, **characterized in that** the bristle carrier (5) is provided with receptacles (6), whose cross-section corresponds to 100 to 125% of the cross-sectional envelope at the fastening-side end (4) of the bristles (3) received.

12. Method according to one of the claims 1 to 11, **characterized in that** the bristle carrier (5) is provided with receptacles (6), whose depth on insertion of a plurality of bristles (3) in a receptacle corresponds to 50 to 200% of the cross-sectional envelope of the plurality of bristles (3).

13. Method according to one of the claims 1 to 12, **characterized in that** the bristle carrier (16) is provided with receptacles (17) for single bristles (14) and then with a depth corresponding to 200 to 500% of the diameter of the single bristles (14).

14. Method according to one of the claims 7 to 9, **characterized in that** the receptacles (5) softened close to the surface are calibrated on extracting the heating element (10).

15. Method according to one of the claims 1 to 14, **characterized in that** the receptacles (6) at the bristle carrier (5) are provided with an entry contour for the fastening-side ends (4) of the bristles (3).

16. Method according to one of the claims 4 to 15, **characterized in that** the pressure and temperature are controlled in such a way that the free volume present between the bristles (3) and the wall of the receptacles (6) is filled with the displaced plastics material without the latter rising above the surface (9) of the bristle carrier (5).

17. Method according to one of the claims 1 to 16, **characterized in that** during pressurization the bristle carrier (5) seals in surrounding manner the entire bristle configuration, so that plasticized material cannot be displaced to the outside.

18. Method according to one of the claims 1 to 17, **characterized in that** the fastening-side ends (4) of the bristles (3) are heated in contactless manner by radiant heat.

19. Method according to claim 18, **characterized in that** at least part of the fastening-side ends (4) is heated in assisted manner by hot gas.

20. Method according to claim 19, **characterized in that** in the case of bristle bundles (36, 37) having different cross-sections, those with the larger cross-section are heated in assisting manner with hot gas.

21. Method according to one of the claims 18 to 20, **characterized in that** in the case of bristles (3) combined into bundles, their fastening-side ends (4) are coalesced.

22. Method according to claim 21, **characterized in that** the plastics material formed on coalescing the fastening-side ends (4) is worked.

23. Method according to claim 22, **characterized in that** the plastics mass formed during the coalescing of the fastening-side ends is calibrated relative to the diameter of the receptacles (6).

24. Method according to one of the claims 1 to 23, **characterized in that** the fastening-side ends (4) of the bristles (3) are melted in such a way that thickenings (8) form through molecular reorientation.

25. Method according to claim 24, **characterized in that** the thickening (8) is constructed in such a way that its cross-section is the same or slightly larger than the calibrated cross-section of the surface-near heated receptacles (6) of the bristle carrier (5).

## Revendications

1. Procédé de fabrication d'articles de brosserie dans lequel, on fabrique un support de poils (5) en matière synthétique thermoplastique présentant des logements (6) pour les poils (3), on introduit les poils par leurs extrémités (4) de fixation dans les logements (6) et on les fixe au support de poils (5) par application de forces mécaniques sur celui-ci, processus au cours duquel de la masse du support de poils est refoulée par rétrécissement des logements (6) vers les extrémités (4) de fixation des poils (3) de manière à les entourer latéralement, **caractérisé en ce qu'**après introduction des poils (3) dans les logements (6), le support de poils (5) est soumis au niveau de sa surface (9) présentant les logements (6) à une pression suffisante pour que le support de poils (5) soit comprimé par réduction de sa hauteur de construction et ainsi la masse est refoulée par fluage à froid et sous l'effet de la chaleur générée par le frottement intermoléculaire provoqué par la pression.

2. Procédé selon la revendication 1, **caractérisé en ce que** la surface du support de poils (5) est soumise à une pression variable.

3. Procédé selon la revendication 1 ou 2, **caractérisé en ce que** la pression est commandée en fonction de la section des logements (6).

4. Procédé selon l'une quelconque des revendications 1 à 3, **caractérisé en ce que** la surface (9) présentant les logements (6) du support de poils (5) n'est chauffée que dans sa partie superficielle à une température ramollissant la matière synthétique thermoplastique du support de poils (5) située en-dessous de la température de fusion pour faciliter le refoulement de la masse du support de poils avant l'application de la pression.

5. Procédé selon l'une quelconque des revendications 1 à 4, **caractérisé en ce que** les logements (6) du support de poils (5) sont chauffés dans leur partie superficielle à une température inférieure à la température de fusion de la matière plastique.

6. Procédé selon la revendication 4 ou 5, **caractérisé en ce que** lors de l'application de la pression, non seulement de la masse est refoulée des zones chauffées, mais le support de poils (5) est également comprimé dans la zone rigide entre les logements (6).

7. Procédé selon l'une quelconque des revendications 4 à 6, **caractérisé en ce que** le support de poils (5) et ses logements (6) sont chauffés à l'aide d'un élément chauffant (10) présentant le même contour.

8. Procédé selon la revendication 7, **caractérisé en ce que** le support de poils (5) et ses logements (6) sont chauffés par l'élément chauffant (10) sans contact.

9. Procédé selon la revendication 7 ou 8, **caractérisé en ce que** l'on maintient entre l'élément chauffant (10) et les surfaces réceptrices de chaleur une fente d'air entre 0,05 mm et 0,5 mm.

10. Procédé selon l'une quelconque des revendications 1 à 9, **caractérisé en ce que** le support de poils (5) présente des logements (6) dont la section correspond à 100 % et jusqu'à 125 % de la surface d'enveloppe de la section des poils (3) qui y sont logés.

11. Procédé selon l'une quelconque des revendications 1 à 10, **caractérisé en ce que** le support de poils (5) présente des logements (6) dont la section correspond à 100 % et jusqu'à 125 % de la surface d'enveloppe de la section des poils (3) qui y sont logés au niveau de leur extrémité (4) de fixation.

12. Procédé selon l'une quelconque des revendications 1 à 11, **caractérisé en ce que** le support de poils (5) présente des logements (6) dont la profondeur dans le cas de l'introduction d'une pluralité de poils (3) dans un logement correspond à 50 % et jusqu'à 200 % de la surface d'enveloppe de la section de la pluralité de poils (3).

13. Procédé selon l'une quelconque des revendications 1 à 12, **caractérisé en ce que** le support de poils (16) présente des logements (17) pour poils individuels (14) et présente alors une profondeur correspondant à 200 % et jusqu'à 500 % du diamètre du poil individuel (14).

14. Procédé selon l'une quelconque des revendications 7 à 9, **caractérisé en ce que** les logements (5) ramollis dans leur partie superficielle sont calibrés lors du dégagement de l'élément chauffant (10).

15. Procédé selon l'une quelconque des revendications 1 à 14, **caractérisé en ce que** les logements (6) du support de poils (5) sont présentent un périmètre d'entrée pour les extrémités (4) de fixation des poils (3).

16. Procédé selon l'une quelconque des revendications 4 à 15, **caractérisé en ce que** la pression et la température sont commandées de telle façon que le volume libre existant entre les poils (3) et la paroi des logements (6) est rempli par la masse de matière plastique refoulée, sans que celle-ci n'empiète sur la surface (9) du support de poils (5).

17. Procédé selon l'une quelconque des revendications 1 à 16, **caractérisé en ce que** durant l'application de la pression, le support de poils (5) est rendu étanche en entourant l'ensemble de la garniture de poils, de sorte que de la matière synthétique plastifiée ne peut pas être refoulée vers l'extérieur.

18. Procédé selon l'une quelconque des revendications 1 à 17, **caractérisé en ce que** les extrémités (4) de fixation des poils (3) sont chauffées sans contact par chaleur rayonnante.

19. Procédé selon la revendication 18, **caractérisé en ce qu'**au moins une partie des extrémités (4) de fixation est chauffée en appoint par du gaz chaud.

20. Procédé selon la revendication 19, **caractérisé en ce que** dans le cas de faisceaux (36,37) de poils de section différente, ceux présentant des sections plus importantes sont chauffées en appoint par du gaz chaud.

21. Procédé selon l'une quelconque des revendications 18 à 20, **caractérisé en ce que** dans le cas de poils (3) réunis en faisceaux, leurs extrémités (4) de fixation sont réunies par fusion.

22. Procédé selon la revendication 21, **caractérisé en ce que** la masse de matière plastique résultant de la fusion des extrémités (4) de fixation est conformée.

23. Procédé selon la revendication 22, **caractérisé en ce que** la masse de matière plastique résultant de la fusion des extrémités (4) de fixation est calibrée en fonction du diamètre des logements (6).

24. Procédé selon l'une quelconque des revendications 1 à 23, **caractérisé en ce que** les extrémités (4) de fixation des poils (3) sont fondues de telle façon que des épaississements (8) se. forment par réorientation moléculaire.

25. Procédé selon la revendication 24, **caractérisé en ce que** l'épaississement (8) est conformé de telle façon que sa section soit égale ou inférieure à la section calibrée des logements (6) du support de poils (5) chauffés dans leur partie superficielle.
